# EUROPEAN PATENT APPLICATION

(11) **EP 1 710 716 A1**
(43) Date of publication of application: **11.10.2006**
(21) Application number: 05704052.9
(22) Date of filing: 24.01.2005
(51) Int. Cl.: G06F 17/30

(54) **CONTENT REPRODUCTION METHOD, CONTENT REPRODUCTION TERMINAL, AND CONTENT PROVIDING SYSTEM**

(30) Priority: 26.01.2004 JP 2004017221
(71) Applicant: MATSUSHITA ELECTRIC INDUSTRIAL CO., LTD., Osaka 571-8501 (JP)
(72) Inventor: YONEMOTO, Yoshifumi Mat. Elec. Ind. Co., Ltd.,, Chuo-ku, Osaka 540-6319 (JP); IDO, Daiji Mat. Elec. Ind. Co., Ltd., IPROC, Chuo-ku, Osaka 540-6319 (JP); YAMAGUCHI, Takao Mat. Elec. Ind. Co., Ltd., IPROC, Chuo-ku, Osaka 540-6319 (JP); SATO, Junichi Mat. Elec. Ind. Co., Ltd., IPROC, Chuo-ku, Osaka 540-6319 (JP); TAKEI, Ichiro Mat. Elec. Ind. Co., Ltd., IPROC, Chuo-ku, Osaka 540-6319 (JP)
(74) Representative: Grünecker, Kinkeldey, Stockmair & Schwanhäusser Anwaltssozietät
(86) International application number: PCT/JP2005/000871
(87) International publication number: WO 2005/071573

(57) **Abstract**

A content playback method that is capable of preventing diversion and outflow of users' personal information, reliably protecting privacy and detecting and playing back content in accordance with users' needs. With this method, data including content is delivered from a data transmission server (10) of a content providing system (S2). This data is received at content playback terminals (41)-(43). The content playback terminals (41)-(43) store history information of detecting content, extract search information according to the users search characteristics from the history information (S7), preferentially select new content corresponding to the search information and plays back the new content (S9).

## Description

### Technical Field

The present invention relates to a content playback method, content playback terminal and content providing system, and, more particularly, relates to a content playback method for playing back content delivered from a data transmission server, content playback terminal implementing this content playback method and a content providing system including the data transmission server and the content playback terminal.

### Background Art

An advertisement providing system and advertisement providing method have been proposed, that distribute advertisement information taking into consideration the time and location consumers (users) view advertisement and consumers' tastes in a pin-point manner, and relay consumers' purchase requests to advertisers (for example, see Patent Document 1). This advertisement providing system is comprised of communication dealer terminals, consumer terminals and company terminals.

A communication dealer terminal stores advertisement information and consumers' positional information and taste information, and selects advertisement information based on the positional information, taste information and viewing time. This selected advertisement information is transmitted from the communication dealer terminal to relevant consumer terminals.

Aconsumer terminal transmits the consumer's (the consumer terminal's) positional information to the communication dealer terminal. The consumer terminal receives advertisement information transmitted from the communication dealer terminal and displays this advertisement information. The consumer selects products and so forth that match the consumer's preferences from the advertisement information and transmits reservation request information for these products and so forth from the consumer terminal to the communication dealer terminal.

A company terminal transmits advertisement information to the communication dealer terminal. This advertisement information includes information related to attributes of targeted consumers and effective locations and times for distributing advertisement information. In addition, the company terminal receives the reservation request information transmitted from the consumer terminal of consumer through the communication dealer terminal. Based on this reservation request information, the company is able to sell products and so forth or so fourth that match consumers' tastes.
Patent Document 1: Japanese Patent Application Laid-Open No.2001-282834

### Disclosure of the Invention

### Problems to be Solved by the Invention

However, with the above advertisement providing system and advertisement providing method, although advertisement information is distributed taking into consideration consumers' viewing time, viewing location and tastes, this advertisement information is based on needs predetermined by the company of the source of distribution and does not reflect consumers' real needs. In addition, using the above advertisement providing system and advertisement providing method requires registration of personal information including information about consumers' tastes. Therefore, there is a likelihood of diversion or outflow of personal information, privacy protection is insufficient.

It is therefore an object of the present invention to provide a content playback method, content playback terminal and content providing system that are capable of preventing diversion and outflow of users' personal information, reliably protecting users' privacy and detecting and playing back content in accordance with users' needs.

### Means for Solving the Problem

A content playback method of the present invention employs a configuration that has: storing history information for content search, extracting from the history information, search information in accordance with search characteristic of a user, preferentially selecting new content corresponding to the search information and playing back the new content.

A content playback terminal of the present invention employs a configuration that has: a communication section that receives content, a storage section that stores history information for content search, a search information extracting section that extracts search information in accordance with search characteristic of the user, a content selecting section that preferentially selects new content corresponding to the search information and a play back section that plays back the new content.

A content providing system of the present invention employs a configuration that has: a data transmission server that transmits data including content, content playback information for performing playback control for the content, and control rule information for performing control of extracting search information in accordance with search characteristics of a user and a content playback terminal, and the content playback terminal is comprised of a communication section that receives the data, a storage section that stores the history information, a search information extracting section that extracts, from the history information, the search information in accordance with the search characteristic of the user, a content selecting section that preferentially selects new content corresponding to the search information and a playback section that plays back the new content based on the content playback information.

### Advantageous Effect of the Invention

According to the present invention, it is possible to prevent diversion or outflow of users' personal information, reliably protect users' privacy and detect and play back content in accordance with users' needs.

### Brief Description of Drawings

FIG. 1 is a flow chart explaining the content playback method according to embodiment 1 of the present invention;
FIG.2 is a structural diagram of the content providing system according to embodiment 1 of the present invention;
FIG.3 is a block diagram of the content playback terminal according to embodiment 1 of the present invention;
FIG.4 is a configuration diagram of the playback output section of the content playback terminal shown in FIG.3;
FIG.5 is a diagram showing content playback information according to embodiment 1 of the present invention;
FIG.6 is a diagram showing control rule information according to embodiment 1 of the present invention;
FIG.7 is a diagram showing history information according to embodiment 1 of the present invention; and
FIG.8 is a diagram showing control rule information according to embodiment 2 of the present invention.

### Best Mode for Carrying Our the Invention

Embodiments of the present invention will be explained below in detail with reference to the accompanying drawings.

(Embodiment 1)

### [Structure of the content providing system]

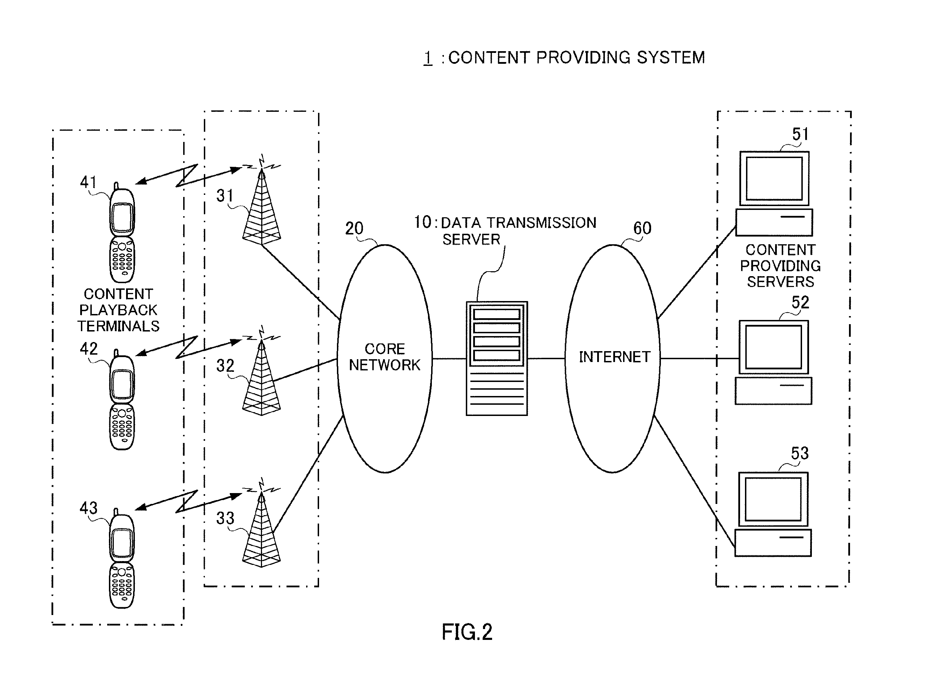

As shown in FIG.2, content providing system 1 according to embodiment 1 of the present invention is comprised of data transmission server (broadcasting server) 10 that transmits data, and a number of content playback terminals 41-43, and further include a number of content providing servers 51-53 that provide content to data transmission server 10 through Internet 60, and base stations 31-33 that receive data from data transmission server 10 through core network 20 and transmit (deliver) this data to content playback terminals 41-43. Here, the number of content playback terminals 41-43, content providing servers 51-53 and base stations 31-33 is not specifically limited in embodiment 1.

Data transmission server 10 delivers carbon copy data to a number of content playback terminals 41-43. Here, the delivered data includes, for example, audio content, video content, and four text-based contents (content1.html, content2.html, content3.html and content4.html). These contents are added control information.

The control information includes content playback information for performing content playback control such as content playback time and content playback display position information, and control rule information (rule.xml) for performing control of extracting search information in accordance with search characteristics of the user.

The audio content includes content playback information as control information. The video content includes content playback information and control rule information as control information. Of the four text-based contents (content1.html to content4.html), the first through third contents (content1.html to content3.html) include content playback information and control rule information as control information. The fourth content (content4.html) does not include control rule information and includes content playback information alone as control information. In other words, the control information for the fourth content (content4.html) is control information for providing default setting before search information is extracted in accordance with search characteristics of the user. The details of these control information will be described later.

### [Structure of the content playback terminal]

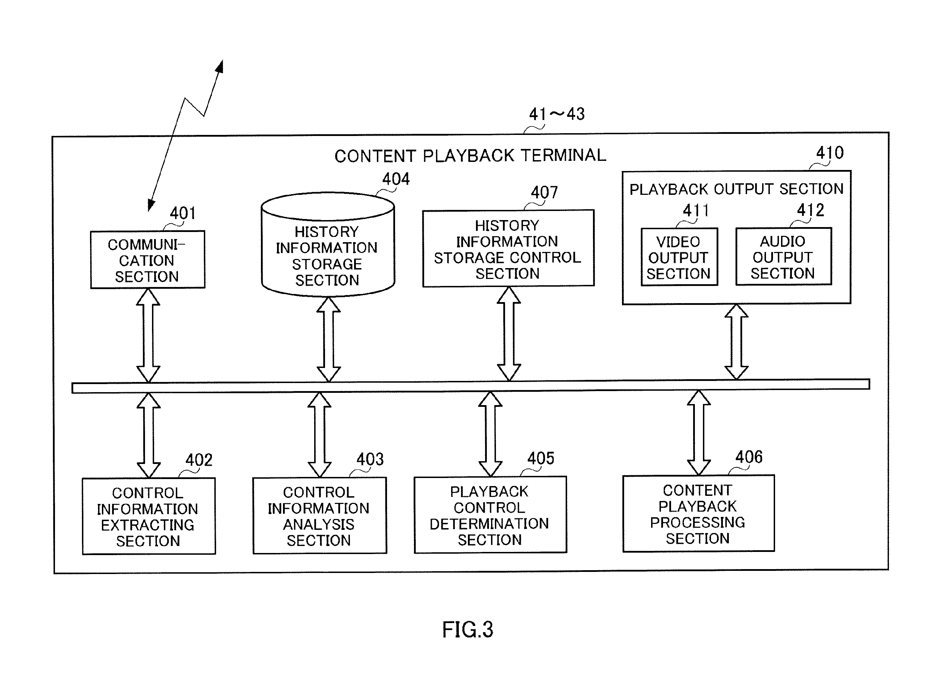

Content playback terminals 41-43 are mobile telephones in embodiment 1. As shown in FIG.3, content playback terminals 41-43 include a communication section that receives data, a storage section that stores history information for data content search, a search information extracting section that extracts search information in accordance with search characteristics of the user from the history information based on control rule information, a content selection section that preferentially selects new content corresponding to the search information, and a playback section that plays back the new content based on content playback information.

Here, in embodiment 1, the communication section of content playback terminals 41-43 is comprised of communication section 401. Communication section 401 is basically designed to perform data transmission and reception and receive data including content.

The storage section is comprised of history information storage section 404 and history information storage control section 407. History information storage section 404 stores at least history information for content search. In other words, history information storage section 404 stores history information in accordance with search characteristics of the user, or, more specifically, search history information for content the user has been interested in by the user's preferences, searched and viewed. The search history information includes information about the time (date, time, hour and so forth) the user performed content search, the place the content was viewed and products viewed and purchased and so forth.

For history information storage section 404, a memory built in content playback terminals 41-43, or, more specifically, any one of electrically erasable and programmable read-only memory (EEPROM), readable and writable volatile memory (SRAM or DRAM) or magnetic memory (hard disk) can be used in practice. In addition, for history information storage section 404, a removable external storage apparatus--for example, a card-type memory or stick-type memory--can be used in practice. In addition, a storage apparatus for a network server comprised of radio links and wired links can be used as history information storage section 404.

History information storage control section 407 performs control for storing the above history information in history information storage section 404.

The search information extracting section is provided with control information extracting section 402 and control information analysis section 403. Control informationextractingsection402analyzesdatareceived in communication section 401 and extracts control information included in the data--that is, content playback information and control rule information--based on the analysis result. Control information analysis section 403 analyzes the control information extracted by control information extracting section 402 and extracts content search information in accordance with search characteristics of the user based on the analysis result and history information eventually.

The content selection section is comprised of playback control determination section 405. Playback control determination section 405 selects content according to the search characteristics of the user based on search information, and determines content to be preferentially played back.

The playback section is provided with content playback processing section 406 and playback output section 410. Content playback processing section 406 performs processing for playing back the content that is selected and determined to be played back according to search characteristics in playback control determination section 405. To be more specific, content playback processing section 406 performs playback processing for video content outputted as actual image, playback processing for audio content outputted as actual sound and playback processing for text-based content outputted as actual image (or sound).

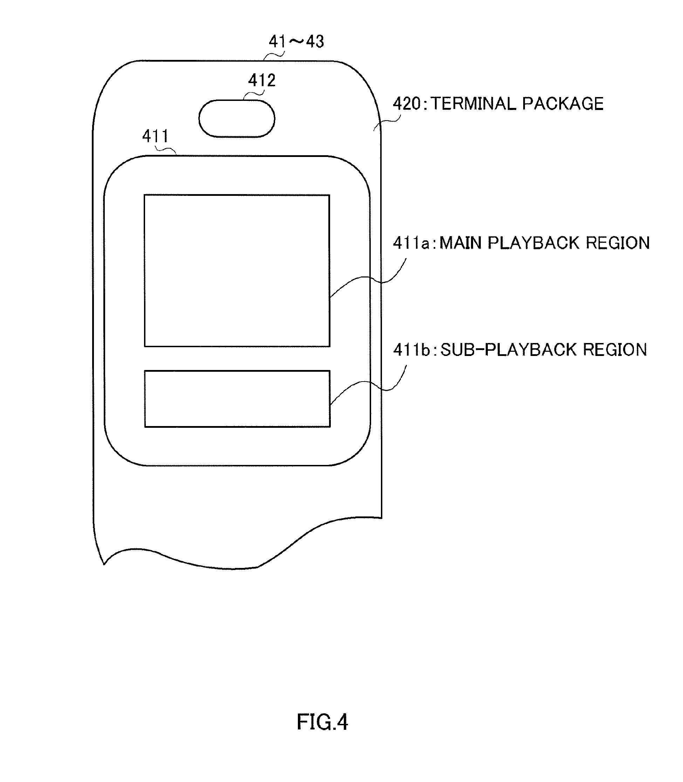

As shown in FIG.3 and FIG.4, playback output section 410 is provided with video output section 411 that is provided in a position in terminal package 420 where the user is able to view at ease, and audio output section 412 that is provided in a position where the sound from the mobile telephone can be heard properly. In embodiment 1, in FIG.4, main playback region 411a that displays image playing back the video content is provided in an upper side of video output section 411, and, in a lower side, sub-playback region 411b is provided that plays back and displays text-based content--more specifically, content such as advertisement delivered from content providing servers 51-53--as characters and images. Liquid crystal display (LCD) or organic electro luminescence (EL) display can be used for video output section 411 in practice. Audio output section 412 is, for example, a speaker.

### [The content playback method]

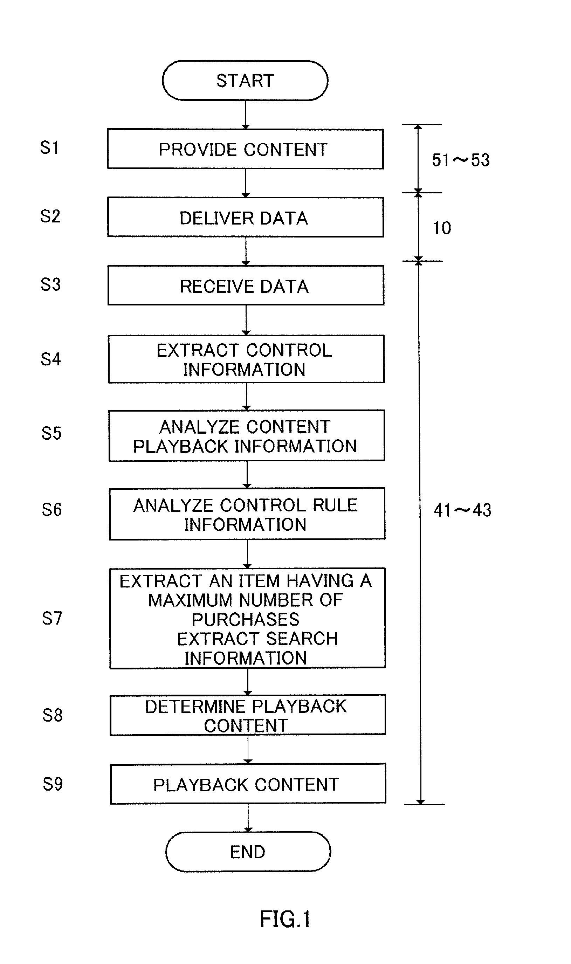

Next, the content playback method in content providing system 1 shown in above FIG.2 will be explained with reference to FIG.1.

First, as shown in step S1, content providing servers 51-53 provide video content, audio content and text-based content such as advertisement, to data transmission server 10 via Internet 60.

Data transmission server 10 generates data in which control information is added to content provided by content providing servers 51-53. As shown in step S2, data is transmitted from data transmission server 10 to base stations 31-33 via core network 20, and further delivered from base stations 31-33 to a number of content playback terminals 41-43 by radio signal as carbon copy data.

As shown in step S3, communication section 401 of content playback terminals 41-43 receives the delivered data. As described above, the received data includes video content, audio content, text-based content and control information for these contents.

As shown in step S4, the control information is extracted from the received data in control information extracting section 402. Inotherwords, contentplayback information and control rule information are extracted from the data. Then, as shown in step S5, first, content playback information is analyzed in control information analysis section 403.

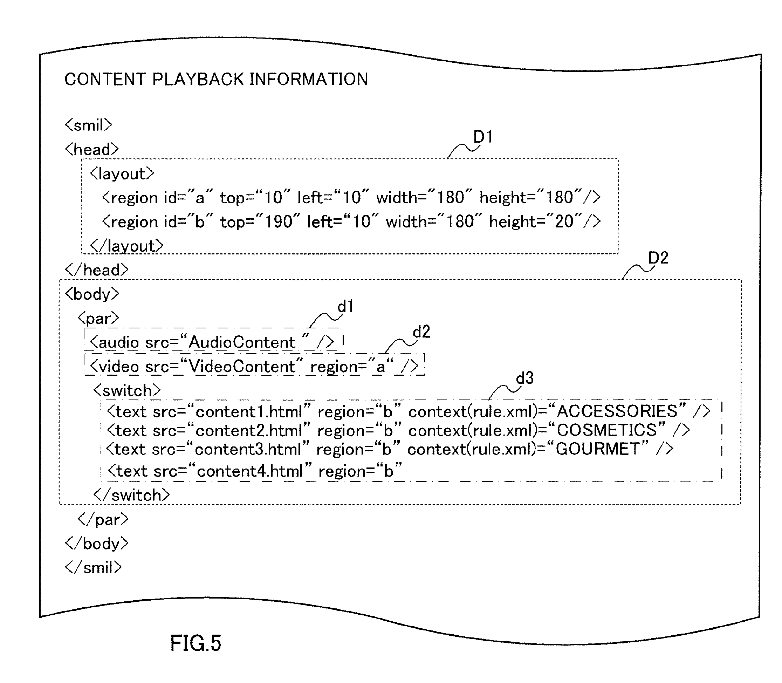

As shown in FIG.5, content playback information is described by, for example, SMIL (Synchronized Multimedia Integration Language), among description languages for producing multimedia content.

Of the content playback information, playback information D1 is playback information for playing back the video content in the region designated "a" and playing back the text-based content in the region designated "b." In other words, region "a" is a region defined as "180 pixel" high from the "10th pixel" in the top and "180 pixel" wide from the "10th pixel" from the left, and the video content is played back in this region "a." Region "a" corresponds to main playback region 411a of video output section 411 shown in FIG.4. Region "b" is defined as "20 pixel" high from the "190th pixel" in the top and "180 pixel" wide from "10th pixel" from the left, and the text-based content is played back in this region "b." Region "b" corresponds to sub-playback region 411b of video output section 411b shown in FIG.4.

Playback information D2 includes playback information d1 for playing back the audio content and playback information d2 for playing back the video content in region "a" (main playback region 411a).

In addition, playback information D2 includes playback information d3 for playing back the text-based content (content1.html to content4.html) in region "b" (sub-playback region 411b). The top first through third text-based contents (content1.html to contnet3.html) of this playback information d3 include control rule information (rule.xml) and attribute information with respect to each content. Attribute information "accessories" is associated with the first content (content1.html). Attribute information "cosmetics" is associated with the second content (content2.html), and attribute information "gourmet" is associated with the third content (content3.html).

The fourth text-based content dose not include control rule information or attribute information. In other words, the fourth content (content4.html) is playback information for default setting, and, when there exist no content corresponding to attribute information associated with the first to third contents (content1.html to content3.html), sequentially plays back the text-based content that is delivered from data transmission server 10 for each reception.

After content playback information is analyzed in step S5, an analysis of the control rule information (rule.xml) for the first to third text-based contents (content1.html to content3.html) of playback information d3 is requested in control information analysis section 403.

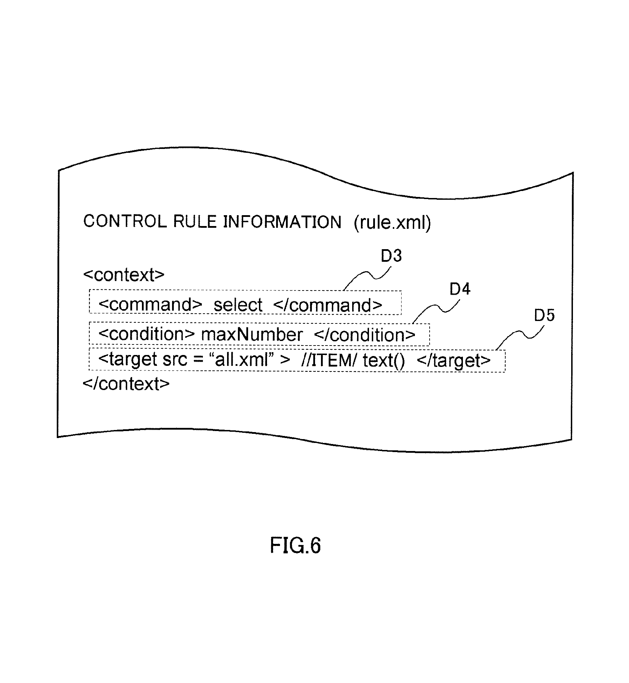

As shown in FIG.6, the control rule information includes, command information (command) D3, condition information (condition) D4 and target resource information (target) D5 for extracting search information in accordance with search characteristics of the user. In other words, the control rule information is information for performing control for selecting, from all the history information stored in history information storage section 404 based on target resource information D5, target information of a maximum number (max Number) based on condition information D4, based on command information D3.

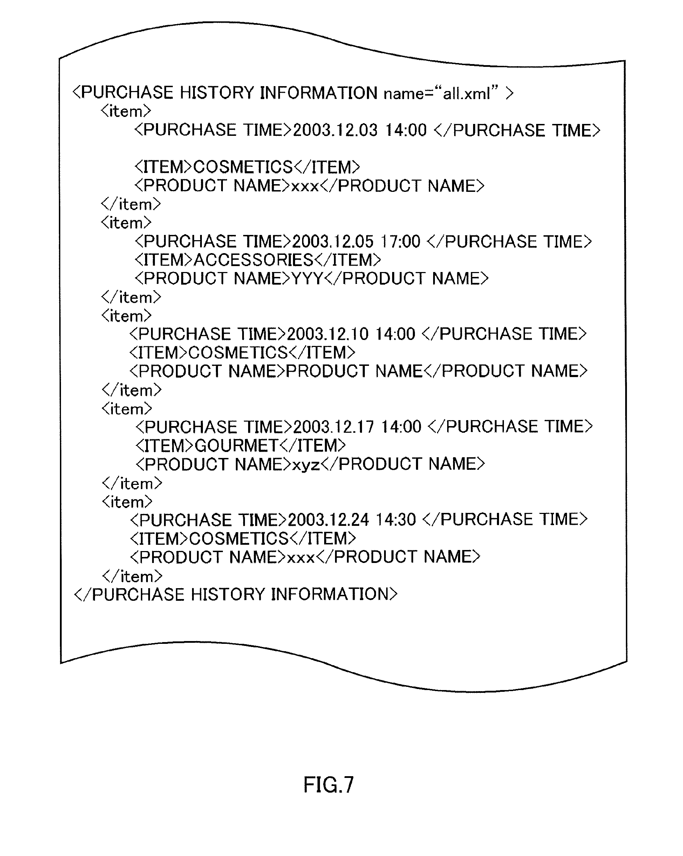

Here, in history information storage section 404, for example, history information is stored for all data the user has searched for in the past, by history information storage control section 407. In embodiment 1, as shown in FIG.7, purchase history information for products (target information) the user has purchased in the past, is stored on a per item basis in history information storage section 404. Each item stores information about the time of purchase and the list and name of the product.

Accordingly, as shown in step S7, by analyzing control rule information, it is possible to select "cosmetics" purchased three times, which is the maximum number of purchases, from all purchase history information stored in history information storage section 404. This "cosmetics" is the product that was purchased most by the user's preference and interest, and is the content the user is highly likely to view for purchase, and is therefore the search information in accordance with search characteristic of the user. That is to say, by selecting the information about the product with the maximum number of purchases, it is possible to extract the search information in accordance with search characteristics of the user.

When this search information is extracted, playback control determination section 405 determines that context information (rule.xml) of the control rule information of playback information d3 corresponds to "cosmetics." Then, as shown in step S8, as text-based content that is to be played back preferentially, the second content (content2.html) is selected and determined.

When the text-based content (content2.html) to be played back is determined, the content to be received in communication section 401 is selected. Content pertaining to "cosmetics" is preferentially selected, and the selected content is subjected to processing that is necessary for playback in content playback processing section 406. After this, as shown in step S9, the processed content is played back in playback output section 410. In other words, the video content is played back as image in main playback region 411a of video output section 411 shown in FIG.4, the audio content is played back as voice in audio output section 412, and the text-based content (content2.html) is preferentially played back as image in sub-playback region 411b.

As described above, according to embodiment 1, search information in accordance with search characteristics of the user is extracted from history information for content search, and new content corresponding to this search information is preferentially selected and played back, so that new content in accordance with the search characteristics of the user can be selected, received and played back without registering the user's personal information at content transmission source (for example, data transmission server 10). Specifically, in embodiment 1, it is possible to extract information about the product with the maximum number of purchases frompurchase history information of products the user has purchased, and preferentially select and play back new content corresponding to this product information.

(Embodiment 2)
A case will be explained with embodiment 2 of the present invention where, in the content playback method, content playback terminals 41-43 and content providing system 1 according to above embodiment 1, content of search information in accordance with search characteristics of the user is changed.

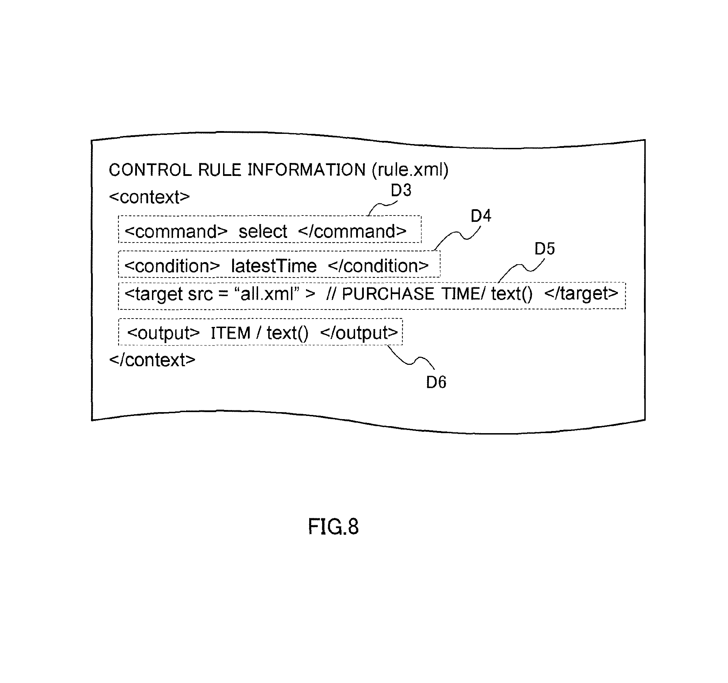

Control rule information (rule.xml) for data delivered from data transmission server 10 of content providing system 1 shown in above FIG.2 includes, as shown in FIG.8, command information (command) D3, condition information (condition) D4, target resource information (target) D5 for extracting search information in accordance with search characteristics of the user and output information (output) D6 of items extracted based on this target resource information D5. This control rule information is the information for selecting target information for purchase time information for the product purchased last (most lately) based on condition information D4, based on command information D3, from all the history information (all.xml) shown in above FIG.7 stored in history information storage section 404 based on target resource information D5, and performs control for outputting items corresponding to the target information based on output information D6.

By analyzing this control rule information, it is possible to select, from all the purchase history information stored in history information storage section 404, target information "December 24, 2003, 14:30," which is purchase time information for the product purchased last and output last purchased "cosmetics" as an item. This "cosmetics" is the product that was purchased most lately by the user's preference and interest, and is content the user is highly likely to view for purchase, and is therefore search information in accordance with the user's search characteristics. In other words, selecting purchase time information for the product the user purchased last enables search information in accordance with the user's search characteristics to be selected.

According to embodiment 2, it is possible to extract purchase time information for the last purchased product from purchase history information of products the user has purchased, and preferentially select and play back new content corresponding to this last purchased product.

The present invention is not limited to above embodiment 1 and embodiment 2. For example, the present invention is not limited to a case where one content including search information in accordance with search characteristics of the user is played back, and it is equally possible to extract two or more search information in accordance with search characteristics of the user and alternately play back contents including these search information.

In addition, in the present invention, history information is not limited to purchase history information for products, and it is equally possible to extract, for example, a keyword for image viewed in video content or for voice heard in audio content in the past, as search information, and preferentially play back content including this search information.

In addition, although, in content playback terminals 41-43 according to embodiment 1 shown in above FIG.3, control information extracting section 402, control information analysis section 403, playback control determination section 405 and content playback processing section 406 are explained as circuit configurations, the present invention may be designed to process a software having these circuit functions using a central processing unit (CPU).

The present application is based on Japanese Patent Application No.2004-17221, filed on January 26, 2004, the entire content of which is expressly incorporated by reference herein.

### Industrial Applicability

The content playback method, content playback terminal and content providing system according to the present invention provide an advantage of preventing diversion and outflow of users' personal information, reliably protecting users' privacy and detecting and playing back content in accordance with users' needs, and are effective for content playback terminals including pagers, radios, personal digital assistants (PDAs), notebook computers, personal computers on the network comprised of wireless LAN and wired LAN, content playback methods and content providing systems.

## Claims

1. A content playback method comprising the steps of:
storing history information for content search;
extracting, from the history information, search information in accordance with search characteristics of a user;
preferentially selecting new content corresponding to the search information; and
playing back the new content.

2. The content playback method according to claim 1, wherein:
the history information includes purchase history information for products the user has purchased;
the search information includes information for a product of a maximum number of purchases extracted from the purchase history information; and
the step of preferentially selecting the new content comprises a step of preferentially selecting new content including the information for the product having a maximum number of purchases.

3. The content playback method according to claim 1, wherein:
the history information includes the purchase history information for products the user has purchased;
the search information includes information for a product purchased last, the information being further extracted from the purchase history information based on purchase time information for the product purchased last; and
the step of preferentially selecting the new content comprises a step of preferentially selecting new content including the information for the product purchased last.

4. A content playback terminal comprising:
a communication section that receives content;
a storage section that stores history information for content search;
a search information extracting section that extracts search information in accordance with search characteristics of a user;
a content selection section that preferentially selects new content corresponding to the search information; and
a playback section that plays back the new content.

5. A content providing system comprising:
a data transmission server that transmits data including content, content playback information for performing playback control for the content, and control rule information for performing control of extracting search information in accordance with search characteristics of a user; and
a content playback terminal, wherein the content playback terminal comprises:
a communication section that receives the data;
a storage section that stores the history information for content search;
a search information extracting section that extracts, from the history information, the search information in accordance with the search
characteristics of the user;
a content selection section that preferentially selects new content corresponding to the search information; and
a playback section that plays back the new content based on the content playback information.

## Amended claims

### Amended claims under Art. 19.1 PCT

**1.** (Amended) A content playback method comprising the steps of:
receiving content and control rule information for performing control of extracting search information in accordance with search characteristics of a user at a content playback terminal;
storing history information for search for the received content;
analyzing the received control rule information and extracting, from the history information, search information in accordance with the search characteristics of the user;
preferentially selecting new content corresponding to the search information; and
playing back the new content.

**2.** The content playback method according to claim 1, wherein:
the history information includes purchase history information for products the user has purchased;
the search information includes information for a product of a maximum number of purchases extracted from the purchase history information; and
the step of preferentially selecting the new content comprises a step of preferentially selecting new content including the information for the product having a maximum number of purchases.

**3.** The content playback method according to claim 1, wherein:
the history information includes the purchase history information for products the user has purchased;
the search information includes information for a product purchased last, the information being further extracted from the purchase history information based on purchase time information for the product purchased last; and
the step of preferentially selecting the new content comprises a step of preferentially selecting new content including the information for the product purchased last.

**4.** (Amended) A content playback terminal comprising:
a communication section that receives content and control rule information for performing control of extracting search information in accordance with search characteristics of a user;
a storage section that stores history information for search for the received content;
a search information extracting section that analyzes the received control rule information and extracts, from the history information, the search information in accordance with the search characteristics of the user;
a content selection section that preferentially selects new content corresponding to the search information; and
a playback section that plays back the new content.

**5.** (Amended) A content providing system comprising:
a data transmission server that transmits data including content, content playback information for performing playback control for the content, and control rule information for performing control of extracting search information in accordance with search characteristics of a user; and
a content playback terminal,
wherein the content playback terminal comprises:
a communication section that receives the data and the control rule information;
a storage section that stores history information for search for the received content;
a search information extracting section that analyzes the received control rule information and extracts, from the history information, the search information in accordance with the search
characteristics of the user;
a content selection section that preferentially selects new content corresponding to the search information; and
a playback section that plays back the new content based on the content playback information.
